Europäisches Patentamt

European Patent Office

Office européen des brevets

(11) Publication number: **0 495 112 A1**

## EUROPEAN PATENT APPLICATION
### published in accordance with Art. 158(3) EPC

(21) Application number: **91913091.4**

(22) Date of filing: **23.07.91**

(86) International application number:
**PCT/JP91/00978**

(87) International publication number:
**WO 92/02352 (20.02.92 92/05)**

(51) Int. Cl.5: **B29C 45/56**

(30) Priority: **03.08.90 JP 207209/90**

(43) Date of publication of application:
**22.07.92 Bulletin 92/30**

(84) Designated Contracting States:
**DE FR GB IT**

(71) Applicant: **KOMATSU LTD.**
**3-6 Akasaka 2-chome**
**Minato-ku Tokyo 107(JP)**

(72) Inventor: **YOKOTA, Akira**
**Komatsu Ltd. Plastic Division, 1-1, Ueno**
**3-chome**
**Hirakata-shi, Osaka 573(JP)**

(74) Representative: **Tiedtke, Harro, Dipl.-Ing.**
**Patentanwälte Tiedtke-Bühling- Kinne &**
**Partner Bavariaring 4 POB 20 24 03**
**W-8000 München 2(DE)**

(54) **INJECTION-COMPRESSION-MOLDING METHOD.**

(57) The present invention relates to an injection-compression-molding method, and more particularly to an injection-compression-molding method which is most suitably applied to thermoplastic resin being high in melting viscosity and low in fluidity, and has as its object the provision of an excellent molding, in which occurrences of crazing, cracking, delamination and so forth due to the shrinkage as a result of residual stress caused by molecular orientation of material resin or due to the stress strain are restricted. Another object of the present invention is to improve a work efficiency by simplifying the molding process. A pressing pressure is applied from behind a cavity to shrink the cavity to a volume less than that of an intended molding, plasticized synthetic resin is injection-compression-filled into the cavity, and thereafter, when the pressure which has been applied from behind the cavity, is lowered, the volume of the cavity is expanded by the elastic restoring force of the plasticized synthetic resin compressed and filled into the cavity. Subsequently, after the elastic restoring force is decreased, the cavity is shrunk to the volume of the intended molding.

FIG. 3

2

TECHNICAL FIELD

The present invention relates to an injection compression molding method, and more particularly to an injection compression molding method best suited to thermoplastic resinous materials of high melt viscosity and low fluidity.

BACKGROUND ART

Injection molding ensures high dimensional accuracy in the production of molded articles, and of various materials for injection molding, materials such as ultrahigh molecular weight polyethylene and fluorine contained resin have excellent impact resistance, wear resistance, self-lubricity, chemical attack resistance etc. Therefore, injection molding with such materials is being widely utilized for the manufacture of various machine parts, household appliances and other products. However, since these thermoplastic synthetic resinous materials are high in melt viscosity and extremely low in fluidity, it is very difficult to mold such materials with ordinary injection molding methods. There have been proposed a number of methods for the injection molding of thermoplastic resinous materials having a high melt viscosity. Two examples of such methods are explained below.

One is the injection molding method for ultrahigh molecular weight polyethylene disclosed in Japanese Patent Publication No.30067/1982. In this method, a cavity volume is preset to 1.5 to 3.0 times the amount of resin to be injected. Then, ultrahigh molecular weight polyethylene that has been melted and plasticized is injected into the cavity at a shearing speed of 50,000 $sec^{-1}$ or more when measured at the inlet. After the completion of the injection, the cavity volume is reduced to a volume that is not more than 2.0 times the volume of the injected resin and less than the initial volume of the cavity, thereby compressing the ultrahigh molecular weight polyethylene within the cavity. The other method is disclosed in Japanese Patent Publication No. 58010/1985. This is directed to an injection compression method for ultrahigh molecular weight polyethylene, fluorine contained resin etc. In this method, the cavity volume is set to the same volume as an intended molding, and molten, plasticized, resinous material is injected through a runner section into the cavity at a shearing speed at which the resinous material is ground into powder. The mold is momentarily opened at a desired point in the time period from a point just before the completion of the injection until the completion of the injection, at which there is a pressure difference between the runner section and the cavity and the resinous material in the runner section is not solidified, so that the volume of the cavity is increased to 1.2 times its initial volume or more. Thereby, the molten, plasticized, resinous material in a powdery state is introduced into the cavity. During the time the material within the cavity is still in its melted state, the cavity volume is reduced to the same volume as the intended molding.

With the first method, comparatively good results can be achieved in injection molding in which a single cavity mold is used, but when a multi-cavity mold is used, the resinous material remains in the runner section of the mold with the result that variations are caused in the weight and/or configuration of the molded products.

The second method employs a very complicated process for introducing the molten, plasticized, thermoplastic resin in a powdery state into the cavity. When injection molding is performed using a multi-cavity mold, the material cannot be evenly introduced into the cavities unless the injection pressure applied to the inside of the cavities is sufficiently high. As a result, the weight of a molding varies every cavity. Furthermore, it is required that the resinous material be injected at a high shearing speed until the injection is completed, in order for the material in its powdery state to be injected into the cavity. However, when the molten, plasticized, resinous material is injected into the cavity with the cavity volume being fixed like the second method, the injection pressure gradually increases as the resinous material is injected. This lowers the injection speed so that the resinous material being injected changes from it powdery state to its solidified state. If the resinous material in its solidified state is injected into the cavity, a shearing stress will remain among the molecules of the material, causing molecule orientation. Since the coefficient of linear expansion in the direction of the orientation differs from that in its perpendicular direction, the molecule orientation causes a residual stress after injection molding, resulting in unfavourable shrinkage and stress strain. Such shrinkage and stress strain are the causes of crazing, cracking, and delamination. For this reason, in the second method, a timing for the expansion of the cavity, that is, a desired point in the time period from a point just before completion of injection until completion of injection, at which there is a pressure difference between the runner section and the cavity and the resinous material in the runner section is not solidified, should be determined. The point just before completion of injection can be easily determined from the injection time, but the time when the resinous material in the runner section is not solidified is difficult to determine, since it varies according to molding conditions such as the melting point of a material, injection temperature, mold temperature, the volume of a cavity and injection time. Even if such molding conditions are fixed, it is impossible to observe the condition inside the mold from the outside. Therefore, the timing for the expansion of the cavity has to be determined through repeatedly conducted tests in which the time elapsing between the instant when injection is completed and when the cavity is expanded is varied, and the mold is opened to observe the condition of the material within the cavity. Further, since the timing for the expansion of the cavity has to be determined whenever materials to be used and molding conditions are changed, the second method is extremely troublesome.

In consideration of the foregoing problems, an object of the present invention is to provide an injection compression molding method that is excellent in operating performance and does not cause shrinkage nor stress strain due to the molecule orientation of resinous materials.

DISCLOSURE OF THE INVENTION

In order to achieve the above object, the injection compression molding method of the invention basically comprises the steps of:

(a) injecting plasticized synthetic resinous material into a cavity that has been shrunk to a volume not more than an intended molding by applying a pressure to a movable mold from its backside;

(b) lowering the pressure applied to the movable mold from its backside after the completion of the injection of the plasticized synthetic resinous material;

(c) expanding the volume of the cavity to a volume more than the intended molding, utilizing an elastic recovery stress of the plasticized synthetic resinous material that has been injected and pressurized in the cavity; and

(d) compressing the volume of the cavity to the same volume as the intended molding, by increasing the pressure applied to the movable mold from its backside again after the elastic recovery stress has been relieved.

Preferably, the plasticized synthetic resinous material is injected into the cavity that has been shrunk to the volume not more than the intended molding, until its resin pressure increases at least to a value at which the elastic recovery stress is caused. It is also preferable to immediately lower an injection pressure after injecting the plasticized synthetic resinous material into the cavity. Further, it is preferable to place restrictions on the expansion of the cavity volume by the elastic recovery stress.

Preferably, the decreasing and increasing of the pressure applied to the movable mold from its backside is controlled by the movement of a compression plate that is engaged with a compression cylinder driven by supplying or exhausting hydraulic oil, and the supply and exhaust of hydraulic oil to and from the compression cylinder is controlled by a relief valve as well as a check valve or a pilot check valve which are disposed on a hydraulic oil line between the compression cylinder and a hydraulic oil source, being juxtaposed between the compression cylinder and a solenoid switching valve on the hydraulic oil line.

In the injection compression molding method of the invention, after the injection of plasticized synthetic resinous material into the cavity shrunk to a volume not more than an intended molding, the pressure applied to the cavity from its backside in order to shrink the cavity volume is lowered, whereby the cavity volume expands with the help of the elastic recovery stress of the plasticized synthetic resinous material that has been injected and compressed within the cavity. During the time the cavity volume is expanded, the molecular orientation of the plasticized synthetic resinous material, which has been caused in the injection process, is disturbed. Even when the cavity volume is shrunk again, the molecular orientation is kept in a disturbed condition. Therefore, crazing, cracking, delamination and the like that occur in a molded product owing to the residual stress caused by the molecular orientation can be avoided.

The elastic recovery stress for disturbing the molecular orientation can be developed by injecting the plasticized synthetic resinous material into the cavity and continuing the injection of the material until its resin pressure within the cavity sufficiently increases. Further, the injection pressure is immediately lowered after the injection of the plasticized synthetic resinous material into the cavity, whereby excessive plasticized synthetic resinous material can be prevented from flowing through the gate into the cavity at the time of the expansion of the cavity volume and a molded product of a specified weight can be obtained. Further, the expansion of the cavity volume caused by the elastic recovery force of the compressed, plasticized synthetic resinous material is restricted by a stopper provided in the movable mold, whereby negative pressure due to the inertia of the constituent members of the cavity is not generated within the cavity, and the occurrence of voids can be prevented.

One example of the means for controlling the drop and rise of the pressure applied to the movable mold from its backside is the movement of the compression plate engaged with the compression cylinder that is driven by supplying and exhausting hydraulic oil. Since the supply and exhaust of hydraulic oil to and from the compression cylinder is controlled by the relief valve as well as the check valve or the pilot check valve, those valves being disposed on the hydraulic oil line extending between the compression cylinder and the hydraulic oil source and being juxtaposed between the compression cylinder and the solenoid switching valve disposed on the hydraulic oil line, a single hydraulic oil source can be used both on the mold side and on the injection molding machine side when the members on these sides are not actuated at the same time like the injection compression molding method of the invention. This arrangement simplifies the hydraulic circuit.

## BRIEF DESCRIPTION OF DRAWINGS

Preferable embodiments of the injection compression molding method according to the invention will now be described by way of example with reference to the accompanying drawings in which:

Fig. 1 is a semi diagrammatical vertical section of an injection molding apparatus, showing its whole structure;

Fig. 2 is an enlarged vertical section of an essential part of the apparatus shown in Fig. 1;

Fig. 3 is a sequence diagram showing a molding process;

Fig. 4 is a semi diagrammatical vertical section of another injection molding apparatus having a different hydraulic circuit, showing its whole structure;

Fig. 5 is a sequence diagram showing another molding process;

Fig. 6 is a semi diagrammatical vertical section of still another injection molding apparatus having a different hydraulic circuit, showing its whole structure;

Fig. 7 is a sequence diagram showing still another molding process;

Fig. 8 is a sequence diagram showing another molding process; and

Fig. 9 is a sequence diagram showing still another molding process.

## BEST MODE FOR CARRYING OUT THE INVENTION

Referring now to the drawings, embodiments of the injection compression molding method of the invention will be concretely described.

The resinous material employed in each embodiment is ultrahigh molecular weight polyethylene. Since ultrahigh molecular weight polyethylene has a much higher molecule weight than ordinary polyethylene and a much higher melt viscosity than other synthetic resinous materials used for injection molding, it is known as a material that is difficult to be molded, compared with other materials. Generally, ultrahigh molecular weight polyethylene is obtained by e.g. Ziegler polymerization. Ultrahigh molecular weight polyethylene has a limiting vis-

cosity [$\eta$] of 3dl/g or more (especially, 10dl/g or more) in decaline of 135°C and a melt index (ASTM D1238F MI120) of 0.01g/10min or less. As such ultrahigh molecular weight polyethylene, "HI-ZEX Million 340M" produced by MITSUI PETROCHEMICAL IND., LTD. (with a melt index of 0.01g/10min or less and a limiting viscosity [$\eta$] of 16.7dl/g) is employed in each embodiment. The injection temperature is not particularly limited so long as it is more than the melting point of the ultrahigh molecular weight polyethylene and less than the decomposition point, but is generally set to be within the range of 150°C to 300°C and more preferably within the range of 170°C to 240°C.

(First Embodiment)

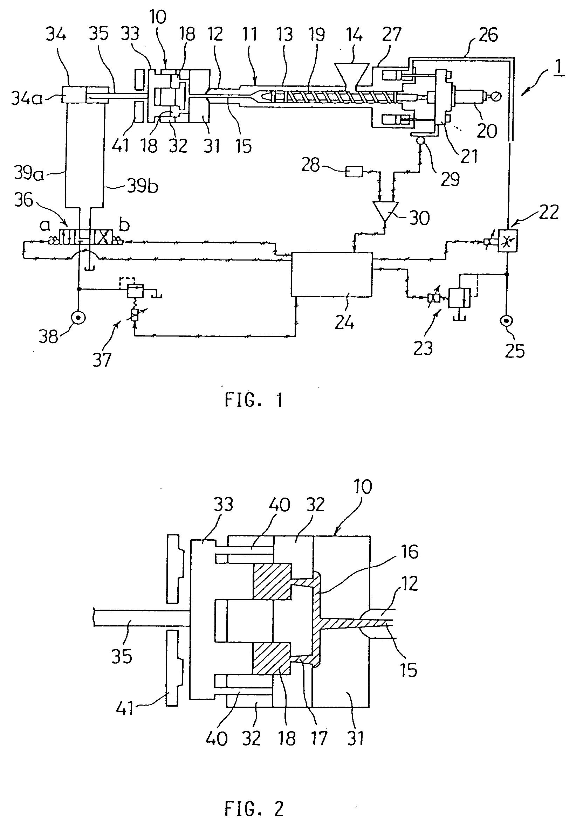

Now reference is made to Fig. 1 that schematically illustrates the whole structure of an injection molding apparatus 1 including an injection molding machine 11 and a hydraulic circuit. A mold 10 used for molding material to produce injection molded parts is connected to the injection molding machine 11 at a nozzle section 12. Provided within a cylinder 13 of the injection molding machine 11 is a screw 19 which melts and mixes pellets of plasticized synthetic resinous material supplied from a hopper 14; measures the molten, plasticized, resinous material; and injects it through a fluid line 15 penetrating the nozzle section 12, a runner section 16 and gate section 17 (see Fig. 2) of the mold 10 into a cavity 18 of the mold 10. The rotation of the screw 19 for melting and mixing of resin pellets and other operations is performed by a driving motor for screw rotation 20. The screw 19 and the driving motor for screw rotation 20 are mounted on a base plate 21 that is driven laterally in the figure by means of hydraulic oil. The hydraulic oil is supplied from a hydraulic oil source 25 through a fluid line 26 to a hydraulic piston system 27 and exhausted in the opposite way. The supply and exhaust of hydraulic oil is executed by controlling a flow control valve 22 and a solenoid relief valve 23 with a control unit 24. In other words, the measurement of plasticized synthetic resinous material to be injected; the to and fro movement of the screw 19 with respect to the nozzle 12 for the injection of the measured material into the cavity 18 of the mold 10; and the application of a specified pressure to the screw 19 in order to impart the specified pressure to the material within the cylinder 13 are performed through the base plate 21 and by means of the supply and exhaust of hydraulic oil to and from the hydraulic piston system 27. The to and fro movement of the screw 19 is controlled by the control unit 24 based on a stroke value preset by a stroke setting device 28. Concretely, the set stroke value is compared, at a comparator 30, with a positional value of the screw 19 that is measured by a screw position detector 29 engaged with the base plate 21. Then, a signal indicating the result of the comparison is issued from the comparator 30 to the control unit 24 for controlling the hydraulic system, and the supply of hydraulic oil from the hydraulic source 25 to the hydraulic piston system 27 is controlled by the flow control valve 22 and the solenoid relief valve 23, whereby the to and fro movement of the screw 19 is determined. The actuation and suspension of the driving motor for screw rotation 20 is executed on the basis of a signal that is supplied from the control unit 24 in relation to the to and fro movement of the screw 19.

As shown in Figs. 1 and 2, the mold 10 is comprised of a fixed mold 31 connected to the nozzle section 12 of the injection molding machine 11, an intermediate mold 32 and a compression plate 33. The mold 32 and the plate 33 define the cavity 18. The volume of the cavity 18 can be varied by moving the compression plate 33 to and fro. The compression plate 33 is engaged with a piston rod 35 of a compression cylinder 34, and the piston rod 35 is driven laterally in the figure by supplying hydraulic oil from a hydraulic oil source 38 through fluid lines 39a and 39b to the compression cylinder 34 or by exhausting the same in the opposite way. The supply and exhaust of hydraulic oil is controlled by a solenoid switching valve 36 and a solenoid relief valve 37 and these valves 36 and 37 are controlled by the control unit 24. More specifically, a solenoid a of the solenoid switching valve 36 is energized and hydraulic oil is supplied from the hydraulic oil source 38 to a piston side 34a of the compression cylinder 34, thereby driving the piston rod 35 to the right in the figure so that the compressing plate 33 moves forwards, shrinking the cavity 18. When the solenoid a of the solenoid switching valve 36 is de-energized and the solenoid b is energized, the hydraulic oil that has been supplied to the piston side 34a of the compression cylinder 34 is discharged and the piston rod 35 is driven to the left in the figure. Therefore, the compression plate 33 moves backwards thereby expanding the volume of the cavity 18. Mounted on the compression plate 33 is a return pin 40 which comes in contact with the intermediate mold 32 when the compression plate 33 moves forwards so that the forward movement of the compression plate 33 is restricted to ensure the minimum volume of the cavity 18. Provided behind the compression plate 33 is a stopper 41 with which the compression plate 33 comes in contact when moving backwards so that the backward movement of the compression plate 33 is restricted to ensure the maximum volume of the cavity 18.

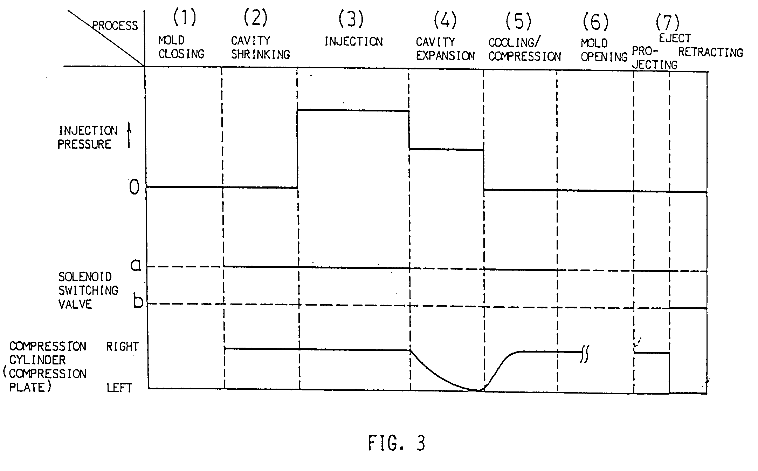

Referring now to Fig. 3, the injection compression molding method of the invention will be explained, in which ultrahigh molecular weight polyethylene is molded by the use of the above-described injection molding apparatus 1 having the injection molding machine 11. Fig. 3 is a sequence diagram showing the operations of the injection molding machine 11, the solenoid switching valve 36 and the compression cylinder 34.

(1) Mold closing process:

The mold 10 is closed with a known means.

(2) Cavity shrinking process:

When the solenoid a of the solenoid switching valve 36 is energized with the mold 10 closed, hydraulic oil is supplied from the hydraulic oil source 38 through the fluid line 39a to the piston side 34a of the compression cylinder 34. Then, the piston rod 35 is driven rightwards in the figure thereby advancing the compression plate 33 so that the cavity 18 shrinks until it has an initial volume (i.e., a value not more than an intended molding). It can be ascertained by the contact of the return pin 40 of the compression plate 33 with the intermediate mold 32 that the volume of the cavity 18 has been set to the initial volume.

(3) Injection process:

Hydraulic oil is supplied from the hydraulic source 25 through the fluid line 26 to the hydraulic piston system 27. The screw 19 then advances by a specified stroke value preset by the stroke setting device 28 so that a specified amount of molten, plasticized, ultrahigh molecular weight polyethylene within the cylinder 13 is injected into the cavity 18 at high pressure and high speed.

(4) Cavity expansion process:

The solenoid a of the solenoid switching valve 36 is brought into a de-energized state. When the solenoid a is in a de-energized state, the compression cylinder 34 on the piston side 34a and the piston rod 35 side communicates with the tank side through the fluid lines 39a and 39b. Therefore, the pressure exerted on the compression plate 33 from its backside to shrink the volume of the cavity 18 is released. Thereby, the compression plate 33 is moved to the left in the figure by the elastic recovery stress of the molten, plasticized, ultrahigh molecular weight polyethylene that has been compressed within the cavity 18, so that the volume of the cavity 18 is expanded. When the volume of the cavity 18 is expanded, the molecular orientation of the molten, plasticized, ultrahigh molecular weight polyethylene is disturbed. Incidentally, the backward travel of the compression plate 33, i.e., the expanded volume of the cavity 18 is restricted by the stopper 41 with which the compression plate 33 comes in contact.

(5) Cooling and compression process:

The elastic recovery stress of the molten, plasticized, ultrahigh molecular weight polyethylene within the cavity 18 is sufficiently relieved. With the cavity 18 expanded, this relieving time is maintained such that the molten, plasticized, ultrahigh molecular weight polyethylene is solidified in the gate section 17, but is not solidified within the cavity 18. After the stress relieving time has elapsed, the solenoid a of the solenoid switching valve 36 is energized and hydraulic oil, the pressure of which has been preset by the relief valve 37, is supplied to the piston side 34a of the compression cylinder 34. The piston rod 35 then moves to the right in the figure thereby advancing the compression plate 33 so that the volume of the cavity 18 shrinks to a given volume that is the same as the intended molding. When the cavity 18 shrinks, the molten, plasticized, ultrahigh molecular weight polyethylene is molded into a product of a specified volume with its molecular orientation, which has been disturbed at the cavity expansion process (4), unchanged.

(6) Mold opening process:

After the molten, plasticized, ultrahigh molecular weight polyethylene within the cavity 18 has been cooled and solidified, the mold 10 is opened by a known means with the solenoid a of the solenoid switching valve 36 being in its de-energized state.

(7) Ejecting process:

In this embodiment, the compression cylinder 34 is used as an ejecting cylinder for removing a molding from the mold 10. Firstly, the solenoid a of the solenoid switching valve 36 is energized and the piston rod 35 is moved to the right in the figure thereby advancing the compression plate 33. A molding is then pushed from its backside and taken out of the mold 10. Thereafter, the solenoid a of the solenoid switching valve 36 is de-energized while the solenoid b is energized so that the piston rod 35 moves to the left allowing the compression plate 33 to move backwards for the next molding cycle.

As described above, the molten, plasticized, ultrahigh molecular weight polyethylene is injected at high pressure and high speed into the cavity 18 which has been shrunk until it has a volume not more than the intended molding. Utilizing the elastic recovery stress of the molten, plasticized, ultrahigh molecular weight polyethylene which has been compressed and injected into the cavity 18, the cavity 18 is expanded until it has a volume more than the intended molding. The cavity 18 is again shrunk to the same volume as the intended molding so that the molten, plasticized, ultrahigh molecular weight polyethylene whose molecular orientation has been disturbed during the expansion of the cavity 18, is compressed to the given volume, with its molecular orientation in its disturbed condition. Accordingly, a residual stress caused by molecular orientation is not generated so that crazing, cracking and delamination etc. can be prevented. Further, since the cavity that has been once expanded is shrunk to the same volume as the intended molding after the injection, sinkage does not take place in moldings. Also, this contributes to improved dimension accuracy.

(Second Embodiment)

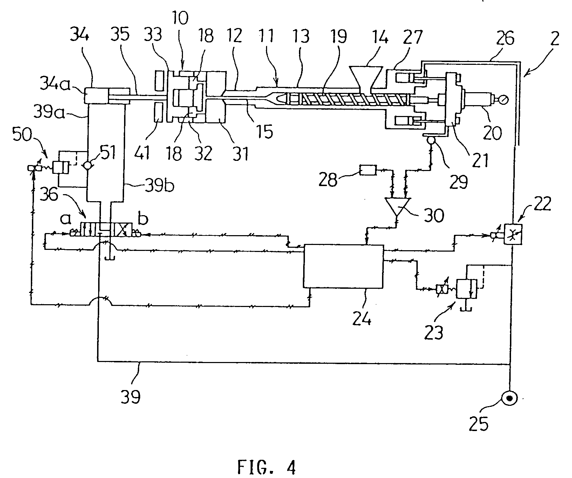

Next, another embodiment of the molding method for ultrahigh molecular weight polyethylene will be explained. In this embodiment, an injection molding apparatus whose hydraulic circuit is modified from that of the injection molding apparatus 1 of the first embodiment is used, and the compression plate 33 is moved to and fro in the same manner as described in the first embodiment. Those parts in Fig. 4 indicated by the same numerals as used for their equivalents in Fig. 1 function substantially similarly to their equivalents, and therefore a description of them will be omitted. Also, the processes substantially similar to those of the first embodiment will be omitted.

Referring to Fig. 4 that schematically illustrates the whole structure of an injection molding apparatus 2, there is provided a fluid line 39 extending from the hydraulic oil source 25 to the piston side 34a of the compression cylinder 34. Disposed above the fluid line 39 is the fluid line 39a extending between the solenoid switching valve 36 and the piston side 34a of the compression cylinder 34. The fluid line 39a is provided with a solenoid relief valve 50 and a check valve 51 which are arranged in juxtaposition. By controlling the solenoid switching valve 36 and the solenoid relief valve 50 with the control unit 24, hydraulic oil is supplied from the hydraulic oil source 25 through the fluid line 39 as well as the fluid line 39a or 39b to the compression cylinder 34, and is exhausted in the opposite way. The supply and exhaust of hydraulic oil drives the piston rod 35 laterally in the figure. Namely, in this embodiment, hydraulic oil is supplied from a single source, i.e., the hydraulic source 25 both to the hydraulic piston system 27 and to the compression cylinder 34.

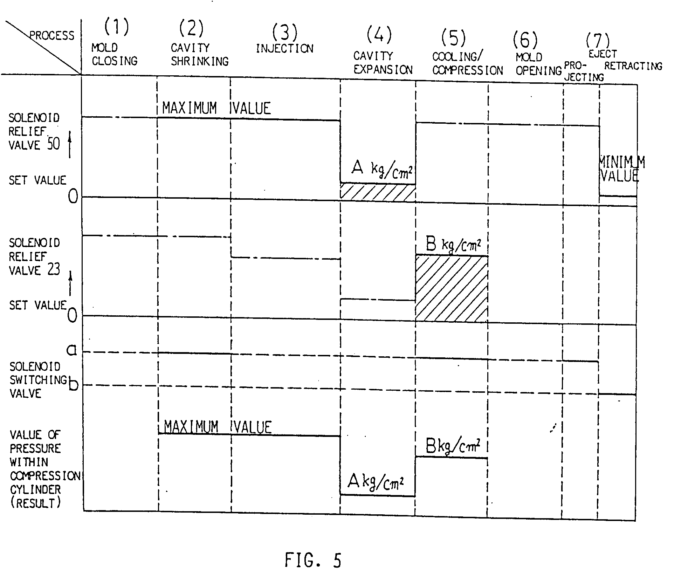

Referring now to Fig. 5, each process of the injection compression molding method of the invention by the use of the above-described injection molding apparatus 2 will be explained. Fig. 5 is a sequence diagram showing the operations of the solenoid relief valves 50, 23 and the solenoid switching valve 36 as well as the values of the pressure within the compression cylinder 34. In Fig. 5, the set pressure values for the solenoid relief valves 50 and 23 are partially indicated by the chain line and these parts have no relation with the operation of the compression plate 33. Therefore, a description of them will be omitted.

(1) Mold closing process:

The mold 10 is closed with a known means.

(2) Cavity shrinking process:

When the mold 10 is in its closed state, the solenoid a of the solenoid switching valve 36 is energized and the set pressure value for the solenoid relief valve 50 is set to a maximum within a possible set range. Hydraulic oil of a maximum pressure is supplied from the hydraulic oil source 25 through the fluid lines 39 and 39a to the piston side 34a of the compression cylinder 34. The hydraulic oil is then trapped at the piston side 34a of the compression cylinder 34 by the operation of the check valve 51. At that time, the pressure at the piston side 34a of the compression cylinder 34 has a maximum value, and the piston rod 35 is driven to the right in the figure thereby advancing the compression plate 33 so that the cavity 18 is shrunk to its initial volume (i.e., a volume not more than an intended molding).

(3) Injection process:

The solenoid a of the solenoid switching valve 36 is de-energized. Even though the solenoid a is brought into a de-energized state, the pressure at the piston side 34a of the compression cylinder 34 is maintained at the maximum value owing to the hydraulic oil trapped at the piston side 34a of the compression cylinder 34, and the volume of the cavity 18 is maintained at the initial value continuously from the prior process since the compression plate 33 is being pressed from its backside. The screw 19 is advanced by a preset stroke value when the volume of the cavity 18 has been shrunk, whereby a specified amount of molten plasticized ultrahigh molecular weight polyethylene within the cylinder 13 is injected into the cavity 18 at high pressure and high speed.

(4) Cavity expansion process:

The set pressure value for the solenoid relief valve 50 is lowered from the maximum value in the prior process to a desired low value A (kg/cm$^2$) with the solenoid a of the solenoid switching valve 36 being in a de-energized state continuously from the prior process so that the pressure at the piston side 34a of the compression cylinder 34 becomes A (kg/cm$^2$) and the pressure exerted on the backside of the compression plate 33 decreases. This allows the compression plate 33 to move backwards to the left in the figure owing to the elastic recovery stress of the molten, plasticized, ultrahigh molecular weight polyethylene that has been compressed within the cavity 18, so that the cavity 18 expands. The pressure value A for the solenoid relief valve 50 is not set to "0" but a value low enough to allow the compression plate 33 to move backwards with the help of the elastic recovery stress (i.e., within the range indicated by hatching in Fig. 5), whereby the pressure inside the cavity 18 is prevented from being negative and the backward travel of the compression plate 33 by the elastic recovery stress is restricted. This arrangement eliminates the need for the stopper 41.

(5) Cooling and compression process:

After the elapse of the relieving time of the elastic recovery stress, the solenoid a of the solenoid switching valve 36 is energized and the set pressure value for the solenoid relief valve 23 is set to B (kg/cm$^2$). As a result, the value of the pressure at the piston side 34a of the compression cylinder 34 becomes B (kg/cm$^2$) and the piston rod 35 moves to the right in the figure, thereby advancing the compression plate 33. The volume of the cavity 18 is therefore shrunk to the same volume as the intended molding. The set pressure value for the solenoid relief valve 23 can be set according to molding conditions for ultrahigh molecular weight polyethylene within the range indicated by hatching in Fig. 5.

(6) Mold opening process:

After the molten, plasticized, ultrahigh molecular weight polyethylene within the cavity 18 has been cooled and solidified, the mold 10 is opened by a known means with the solenoid a of the solenoid switching valve 36 being de-energized.

(7) Ejecting process:

The solenoid a of the solenoid switching valve 36 is energized. Then, the piston rod 35 moves to the right in the figure thereby advancing the compression plate 33 to push the backside of the molding so that it is removed from the mold 10. Thereafter, the solenoid a of the solenoid switching valve 36 is de-energized whilst the solenoid b is energized, and the set pressure value for the solenoid relief valve 50 is set to its minimum so that the piston rod 35 moves to the left in the figure allowing the compression plate 33 to move backwards for the next molding cycle.

(Third Embodiment)

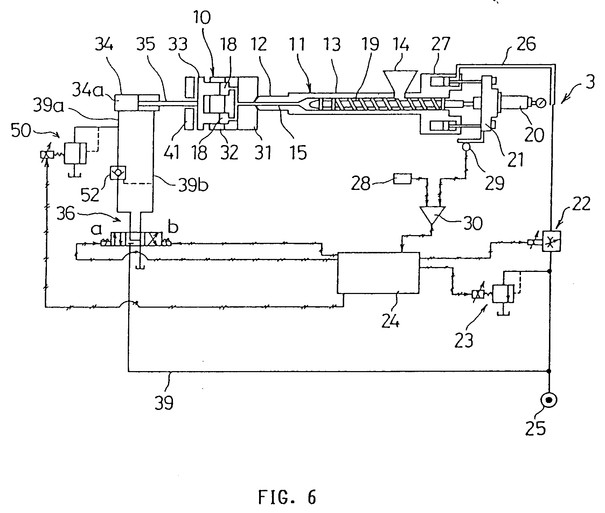

Next, another embodiment of the molding method for ultrahigh molecular weight polyethylene will be explained. In this embodiment, an injection molding apparatus whose hydraulic circuit for the compression cylinder 34 is partially modified from that of the injection molding apparatus of the second embodiment is used, and the compression plate 33 is moved to and fro in the same manner as described in the first and second embodiments. Those parts in Fig. 6 indicated by the same numerals as used for their equivalents in Figs. 1 and 4 function substantially similarly to their equivalents and, therefore, a description of them will be omitted. Also, the processes substantially similar to those of the first and second embodiments will be omitted.

Reference is made to Fig. 6 that schematically illustrates the whole structure of an injection molding apparatus 3. There is provided the fluid line 39 extending from the hydraulic oil source 25 to the piston side 34a of the compression cylinder 34. Disposed above the fluid line 39 is the fluid line 39a extending between the solenoid switching valve 36 and the piston side 34a of the compression cylinder 34. The fluid line 39a is provided with the solenoid relief valve 50 and a pilot check valve 52 which are juxtaposed. The pilot check valve 52 is worked by pilot pressure introduced into the fluid line 39b which communicates with the piston rod 35 side of the compression cylinder 34. By controlling the solenoid switching valve 36 and the solenoid relief valve 50 with the control unit 24, hydraulic oil is supplied from the hydraulic oil source 25 through the fluid line 39 as well as the fluid line 39a or 39b to the compression cylinder 34, and exhausted in the opposite way. The supply and exhaust of hydraulic oil drives the piston rod 35 laterally in the figure.

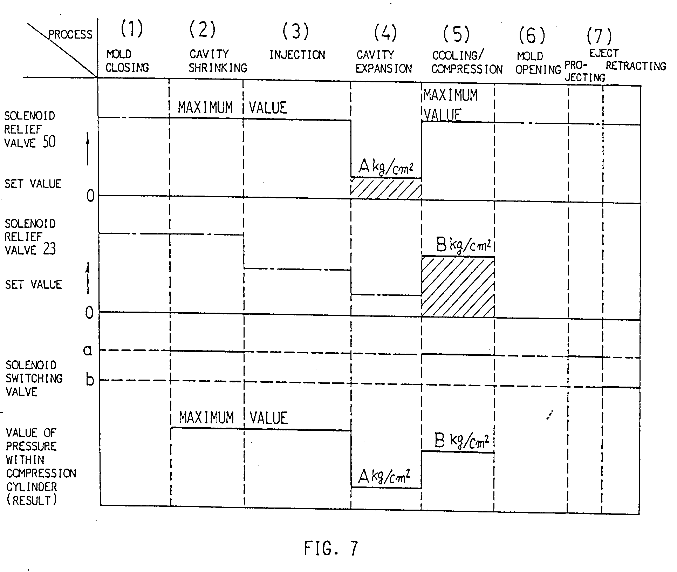

Referring now to Fig. 7, each process of the injection compression molding method of the invention by the use of the above injection molding apparatus 3 will be described. Fig. 7 is a sequence diagram showing the operations of the solenoid relief valves 50, 23 and the solenoid switching valve 36 as well as the values of the pressure within the compression cylinder 34. In Fig. 7, the set pressure values for the solenoid relief valves 50 and 23 are partially indicated by the chain line and these parts have no relation with the operation of the compression plate 33. Therefore, a description of them will be omitted.

(1) Mold closing process, (2) Cavity shrinking process, (3) Injection process and (4) Cavity expansion process of the third embodiment are substantially similar to those of the second embodiment and, therefore, a description of them will be omitted.

(5) Cooling and compression process:

After the elapse of the relieving time of the elastic recovery stress, the solenoid a of the solenoid switching valve 36 is energized, and the set pressure value for the solenoid relief valve 50 is set to its maximum whilst the set pressure value for the solenoid relief valve 23 is set to B ($kg/cm^2$). As a result, the pressure at the piston side 34a of the compression cylinder 34 becomes B ($kg/cm^2$) and the piston rod 35 moves to the right in the figure, thereby advancing the compression plate 33. The cavity 18 is therefore shrunk to the same volume as an intended molding. The set pressure value for the solenoid relief valve 23 can be set according to molding conditions for ultrahigh molecular weight polyethylene within the range indicated by hatching in Fig. 5.

(6) Mold opening process:

This process is substantially the same as that of the second embodiment and therefore a description of it is omitted.

(7) Ejecting process:

The solenoid a of the solenoid switching valve 36 is energized. Then, the piston rod 35 moves to the right in the figure thereby advancing the compression plate 33 to push the backside of the molding so that it is removed from the mold 10. Thereafter, the solenoid a of the solenoid switching valve 36 is de-energized whilst the solenoid b is energized. The pilot check valve 52 is actuated so that the piston rod 35 moves to the left in the figure allowing the compression plate 33 to move backwards for the next molding cycle.

In the first to third embodiments, a maximum pressure is exerted on the backside of the cavity 18 before and during injection, thereby maintaining the volume of the shrunk cavity 18 at a certain value. After the cavity volume has been once expanded by lowering the pressure exerted on the backside after the injection, the pressure is again applied to the backside of the cavity 18 to compress the cavity 18 until it has the same volume as the intended molding. This arrangement may be modified as follows. The pressure exerted on the cavity 18 from its backside before and during injection is made somewhat lower. As the resin is injected into the cavity, a resin pressure is developing within the cavity 18. This resin pressure, which is going to equilibrate with the pressure exerted on the backside, pushes the movable mold back so that the cavity volume is expanded. After the injection, a higher pressure is applied to compress the cavity so that it has a given volume that is the same as the intended molding.

In forth and fifth embodiments, there will be given an explanation on a molding process in which the above modified molding method is adopted, using the injection molding apparatus 2 and 3 of the second and third embodiments.

(Forth Embodiment)

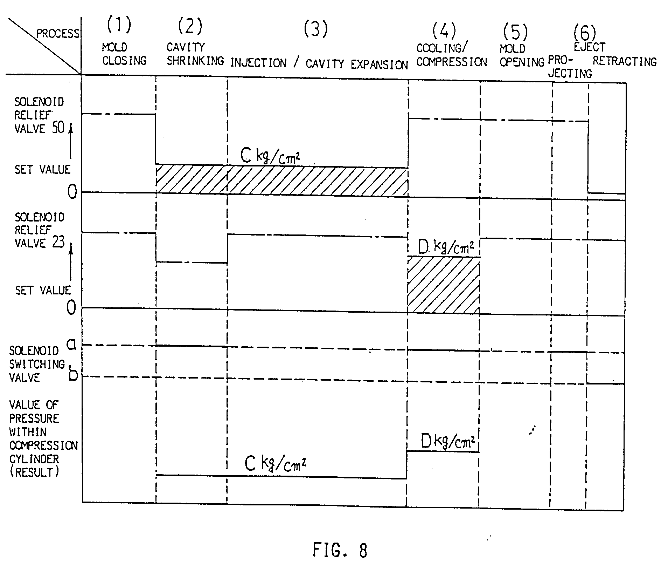

Referring to the sequence diagram of Fig. 8, another embodiment of the molding method will be explained. In this embodiment, the injection molding apparatus 2 (see Fig. 4) used in the second embodiment is employed.

(1) Mold closing process:

The mold 10 is closed with a known means.

(2) Cavity shrinking process:

With the cavity 10 being in its closed state, the solenoid a of the solenoid switching valve 36 is energized. In the meantime, the set pressure value for the solenoid relief valve 50 is set to C(kg/cm²) and the cavity 18 is shrunk until it has an initial volume that is equivalent to the volume of an intended molding.

(3) Injection and cavity expansion process:

The solenoid a of the solenoid switching valve 36 is de-energized with the set pressure value for the solenoid relief valve 50 being maintained at C-(kg/cm²) continuously from the prior process. Under this condition, the screw 19 is moved forwards by a preset stroke value, thereby injecting a specified amount of molten, plasticized, ultrahigh molecular weight polyethylene from the cylinder 13 into the cavity 18 at high pressure and high speed. As the molten, plasticized, ultrahigh molecular weight polyethylene is injected into the cavity 18, a resin pressure is developing within the cavity 18. The resin pressure, which is going to equilibrate with the pressure exerted on the backside, pushes the compression plate 33 back, thereby expanding the cavity volume. The set pressure value for the solenoid relief valve 50 can be set in accordance with molding conditions for ultrahigh molecular weight polyethylene within the range (the upper limit is C kg/cm²) indicated by hatching in the figure.

(4) Cooling and compression process:

After a specified amount of molten, plasticized, ultrahigh molecular weight polyethylene has been injected into the cavity 18, the solenoid a of the solenoid switching valve 36 is energized and the set pressure value for the solenoid relief valve 23 is set to D (kg/cm²). As a result, the pressure at the piston side 34a of the compression cylinder 34 becomes D (kg/cm²) and the piston rod 35 moves to the right in the figure, thereby advancing the compression plate 33. The volume of the cavity 18 is therefore shrunk to the same volume as the intended molding. The set pressure value for the solenoid relief valve 23 can be set according to molding conditions for ultrahigh molecular weight polyethylene within the range (the upper limit is D kg/cm²) indicated by hatching in the figure.

(5) Mold opening process:

After the molten, plasticized, ultrahigh molecular weight polyethylene within the cavity 18 has been cooled and solidified, the mold 10 is opened by a known means with the solenoid a of the solenoid switching valve 36 being de-energized.

(6) Ejecting process:

The solenoid a of the solenoid switching valve 36 is energized. Then, the piston rod 35 moves to the right in the figure thereby advancing the compression plate 33 to push the backside of the molding so that it is removed from the mold 10. Thereafter, the solenoid a of the solenoid switching valve 36 is de-energized whilst the solenoid b is energized, and the set pressure value for the solenoid relief valve 50 is set to its minimum so that the piston rod 35 moves to the left in the figure allowing the compression plate 33 to move backwards for the next molding cycle. When the compression plate 33 is moved backwards, the set pressure value for the solenoid relief valve 50 is set to its minimum.

(Fifth embodiment)

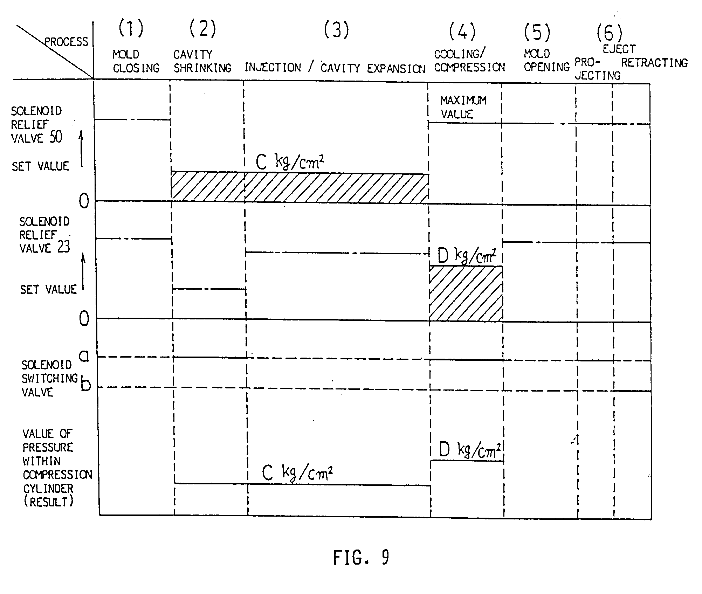

Referring to the sequence diagram of Fig. 9, another embodiment of the molding method will be explained. In this embodiment, the injection molding apparatus 3 (see Fig. 6) used in the third embodiment is employed.

(1) Mold closing process, (2) Cavity shrinking process and (3) Injection and cavity expansion process of this embodiment are substantially identical with those of the forth embodiment and therefore a description of them will be omitted.

(4) Cooling and compression process:

After the elapse of the relieving time of the elastic recovery stress, the solenoid a of the solenoid switching valve 36 is energized, and the set pressure value for the solenoid relief valve 50 is set to its maximum whilst the set pressure value for the solenoid relief valve 23 is set to D (kg/cm$^2$). As a result, the pressure at the piston side 34a of the compression cylinder 34 becomes D (kg/cm$^2$) and the piston rod 35 moves to the right in the figure, thereby advancing the compression plate 33. The cavity 18 is therefore shrunk to the same volume as an intended molding. The set pressure value for the solenoid relief valve 23 can be set according to molding conditions for ultrahigh molecular weight polyethylene within the range (the upper limit is D kg/cm$^2$) indicated by hatching in the figure.

(5) Mold opening process:

This process is substantially identical with that of the forth embodiment and therefore a description of it is omitted.

(6) Ejecting process:

The solenoid a of the solenoid switching valve 36 is energized. Then, the piston rod 35 moves to the right in the figure thereby advancing the compression plate 33 to push the backside of the molding so that it is removed from the mold 10. Thereafter, the solenoid a of the solenoid switching valve 36 is de-energized whilst the solenoid b is energized. The pilot check valve 52 is actuated so that the piston rod 35 moves to the left allowing the compression plate 33 to move backwards for the next molding cycle.

In the second to fifth embodiments, a residual stress due to molecular orientation was not generated and high quality molded products free from crazing, cracking and delamination etc. could be obtained like the first embodiment.

There has been given, in the foregoing embodiments, an explanation on the injection compression molding method in which ultrahigh molecular weight polyethylene, which is difficult to be molded because of its extremely high melt viscosity compared with other synthetic resins used for injection molding, is employed: however, it is needless to say that high quality products can be achieved by applying the injection compression molding method of the invention to molding of synthetic resinous materials having a comparatively low molecular weight and melt viscosity.

INDUSTRIAL APPLICABILITY

The injection compression molding method of the invention can be applied not only to ultrahigh molecular weight polyethylene that is difficult to be molded but also to thermoplastic resinous materials having a lower molecular weight or a lower melt viscosity than ultrahigh molecular weight polyethylene, such as polyethylene, polyamide and polypropylene. Obviously, high quality molded products can be obtained in both cases.

## Claims

1. An injection compression molding method comprising the steps of:

   (a) injecting plasticized synthetic resinous material into a cavity that has been shrunk to a volume not more than an intended molding by applying a pressure to a movable mold from its backside;

   (b) lowering the pressure applied to the movable mold from its backside after the completion of the injection of the plasticized synthetic resinous material;

   (c) expanding the volume of the cavity to a volume more than the intended molding, utilizing an elastic recovery stress of the plasticized synthetic resinous material that has been injected and pressurized in the cavity; and

   (d) compressing the volume of the cavity to the same volume as the intended molding, by increasing the pressure applied to the movable mold from its backside again after the elastic recovery stress has been relieved.

2. The injection compression molding method as claimed in Claim 1, wherein the plasticized synthetic resinous material is injected into the cavity that has been shrunk to the volume not more than the intended molding, until its resin pressure increases at least to a value at which the elastic recovery stress is caused.

3. The injection compression molding method as claimed in Claim 1 or 2, wherein after injecting the plasticized synthetic resinous material into the cavity, an injection pressure is immediately lowered.

4. The injection compression molding method as claimed in any of Claims 1 through 3, wherein restrictions are placed on the cavity volume expansion by the elastic recovery stress.

5. The injection compression molding method as claimed in any of Claims 1 through 4, wherein decreasing/increasing of the pressure applied to the movable mold from its backside is controlled by the movement of a compression plate that is engaged with a compression cylinder driven by supplying or exhausting hydraulic oil.

6. The injection compression molding method as claimed in Claim 5, wherein the supply and exhaust of hydraulic oil to and from the compression cylinder is controlled by a relief valve as well as a check valve or a pilot check valve which are disposed on a hydraulic oil line between the compression cylinder and a hydraulic oil source, being juxtaposed between the compression cylinder and a solenoid switching valve disposed on the hydraulic oil line.

FIG. 1

FIG. 2

| PROCESS | (1) MOLD CLOSING | (2) CAVITY SHRINKING | (3) INJECTION | (4) CAVITY EXPANSION | (5) COOLING/ COMPRESSION | (6) MOLD OPENING | (7) PRO-JECTING EJECT RETRACTING |

FIG. 3

FIG. 4

FIG. 5

EP 0 495 112 A1

FIG. 6

FIG. 7

EP 0 495 112 A1

FIG. 8

EP 0 495 112 A1

FIG. 9

EP 0 495 112 A1

# INTERNATIONAL SEARCH REPORT

International Application No PCT/JP91/00978

## I. CLASSIFICATION OF SUBJECT MATTER (if several classification symbols apply, indicate all) °

According to International Patent Classification (IPC) or to both National Classification and IPC

Int. Cl$^5$ B29C45/56

## II. FIELDS SEARCHED

Minimum Documentation Searched [7]

| Classification System | Classification Symbols |
|---|---|
| IPC | B29C45/56 |

Documentation Searched other than Minimum Documentation
to the Extent that such Documents are Included in the Fields Searched [8]

| | |
|---|---|
| Jitsuyo Shinan Koho | 1962 – 1990 |
| Kokai Jitsuyo Shinan Koho | 1972 – 1990 |

## III. DOCUMENTS CONSIDERED TO BE RELEVANT [9]

| Category * | Citation of Document, [11] with indication, where appropriate, of the relevant passages [12] | Relevant to Claim No. [13] |
|---|---|---|
| A | JP, A, 61-205112 (Idemitsu Petrochemical Co., Ltd.), September 11, 1986 (11. 09. 86), Claim, line 5, lower right column, page 2 to line 15, lower left column, page 3, drawing (Family: none) | 1-6 |
| A | JP, B2, 60-58010 (Mitsui Petrochemical Industries, Ltd.), December 18, 1985 (18. 12. 85), & US, A, 4489033 | 1-6 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents. such combination being obvious to a person skilled in the art

"&" document member of the same patent family

## IV. CERTIFICATION

| Date of the Actual Completion of the International Search | Date of Mailing of this International Search Report |
|---|---|
| October 3, 1991 (03. 10. 91) | October 21, 1991 (21. 10. 91) |

| International Searching Authority | Signature of Authorized Officer |
|---|---|
| Japanese Patent Office | |

Form PCT/ISA/210 (second sheet) (January 1985)